(19) Europäisches Patentamt
European Patent Office
Office européen des brevets

(11) **EP 3 035 515 A1**

(12) **EUROPEAN PATENT APPLICATION**

(43) Date of publication:
**22.06.2016 Bulletin 2016/25**

(51) Int Cl.:
**H02M 3/335** (2006.01)

(21) Application number: **14198097.9**

(22) Date of filing: **16.12.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ABB Technology Oy**
**00380 Helsinki (FI)**

(72) Inventors:
• **Nousiainen, Lari**
**00380 Helsinki (FI)**

• **Leppäaho, Jari**
**00380 Helsinki (FI)**
• **Lämsä, Marco**
**00380 Helsinki (FI)**

(74) Representative: **Kolster Oy Ab**
**Iso Roobertinkatu 23**
**PO Box 148**
**00121 Helsinki (FI)**

(54) **Isolated DC-DC converter**

(57)    An isolated switched DC-DC converter comprising a transformer providing isolation between a primary circuit and a secondary circuit, a main switching component ($Q_1$) provided in the primary circuit adapted to switch the primary current on and off, a gate driver ($A_2$) adapted to control the main switching component ($Q_1$) on the basis of a control signal ,a pulse generator adapted to generate a pulse sequence, each pulse of the pulse sequence forming a start pulse ($u_{set}$) for starting a switching period, a maximum current comparator ($A_1$) in the primary circuit adapted to produce a first reset signal ($u_{rp}$) when the primary current is above a set limit, a secondary side controller in the secondary circuit adapted to produce a second reset signal ($u_{rs}$) for controlling an electrical property in the secondary circuit, a digital isolator ($D_4$) adapted to receive the second reset signal from the secondary side controller and to transmit the second reset signal to the primary circuit, and a gate driver logic circuit ($D_3$, $D_2$) adapted to receive the start pulse, the first reset signal and the second reset signal, and to form the control signal to the gate driver based on the start pulse, the first reset signal and the second reset signal.

FIG 3

EP 3 035 515 A1

Printed by Jouve, 75001 PARIS (FR)

**Description**

FIELD OF THE INVENTION

The present invention relates to DC-DC converters, and more specifically to isolated switched DC-DC converters.

BACKGROUND OF THE INVENTION

Isolated DC-DC converters are used in many applications for providing stabilized voltage or current to a power consuming load. Switched DC-DC converters are devices in which one or more switches are modulated with a high frequency such that operation of the switch or switches in linear operation area is minimized to minimise the losses of the switches.

The isolation of the DC-DC converter requires a transformer or similar inductive component which enables to transfer power from the primary side of the converter to the secondary side of the converter. The transformer separates galvanically the primary and secondary sides of the circuit such that safer operation can be achieved. Further, the galvanic isolation helps in designing converters such that the disturbance to other electrical devices is reduced.

The control of the isolated DC-DC converter is typically carried out in the primary side of the converter. This requires transferring the signal of output voltage or current to the primary side of the converter. Typical component for conveying the feedback signal from the secondary to the primary of the converter is an optocoupler. For the feedback to be possible, the optocoupler transfers feedback signal as an analog magnitude-based signal.

It has been noticed that optocouplers have some reliability problems and high parameter variation due to ageing and temperature variations. That is to say that optocouplers do not transmit information accurately when the component gets older or when the component is in changing temperature. Further, the use of optocouplers in high temperatures is not reliable. The parameter variations of optocoupler lead to inconsistent feedback information leading further to inaccuracy in the control.

Another problem relating to use of optocouplers is the fact that the bandwidth of optocouplers is relatively low which may limit the bandwidth of the converter control system.

BRIEF DESCRIPTION OF THE INVENTION

An object of the present invention is to provide a power supply circuit so as overcome the above problem. The object of the invention is achieved by a power supply circuit which is characterized by what is stated in the independent claim. The preferred embodiments of the invention are disclosed in the dependent claims.

The invention is based on the idea of providing the control of the isolated switched DC-DC converter in the secondary side of the converter and employing a digital isolator for transmitting information relating to control through the isolation barrier.

As feedback information is not transmitted through the isolation barrier, optocouplers are not needed in the converter. Digital isolators are able to transmit digital on/off data from the primary to the secondary side of the converter and from the secondary to the primary side of the converter. In the design of the switching converter of the invention the start of each pulse period may be communicated from the primary side to the secondary side. Further, reset command to the gating pulse of the main switch is transmitted from the secondary side of the converter to the primary side for control and protection purposes.

The control of output current or voltage is more accurate with the present invention than with the known structures as optocouplers are not needed for transmitting magnitude-based feedback signals.

BRIEF DESCRIPTION OF THE DRAWINGS

In the following the invention will be described in greater detail by means of preferred embodiments with reference to the attached drawings, in which

Figure 1 shows an embodiment of the invention in a flyback converter,
Figures 2 and 3 show examples of current and voltage waveforms of the converter of Figure 1;
Figure 4 shows an embodiment of the invention in a forward converter; and
Figure 5 shows examples of current and voltage waveforms of the converter of Figure 4.

DETAILED DESCRIPTION OF THE INVENTION

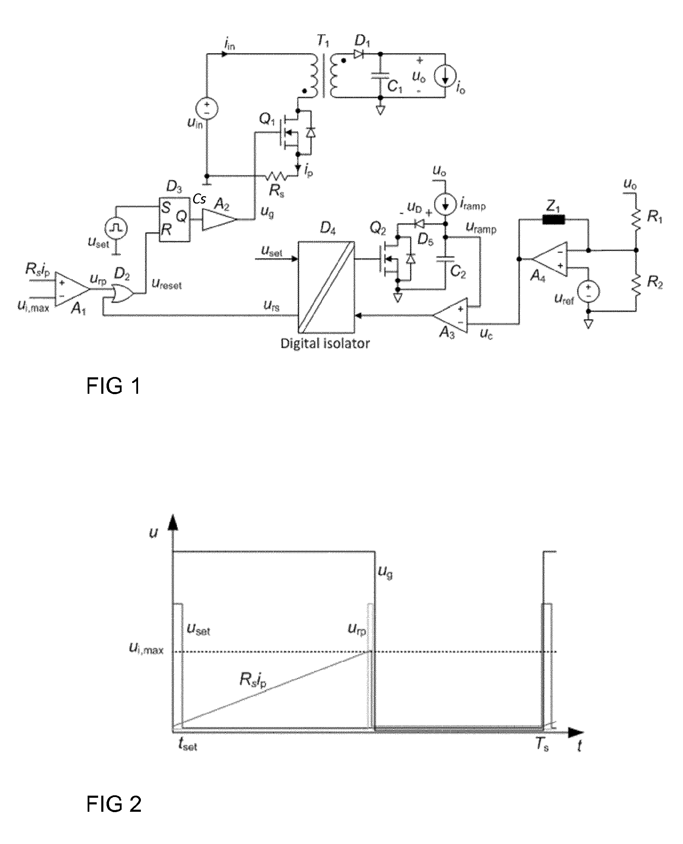

Figure 1 shows voltage-mode control of a flyback converter employing an embodiment of the invention. Generally a flyback converter comprises a primary circuit and a secondary circuit. The main switching component is in the primary circuit and it is fed from input voltage $u_{in}$. As flyback converter is an isolated converter, the main circuit comprises a transformer $T_1$ having its primary connected in series with the main switching component $Q_1$. The primary side of the converter has further a current sense resistor $R_s$ in series with the main switching component $Q_1$.

The secondary circuit of the flyback converter has the secondary of the transformer $T_1$, a diode $D_1$ and a capacitor $C_1$. The voltage over capacitor $C_1$ is the output voltage $u_o$ of the converter. The basic operation of flyback converter is such that when $Q_1$ is controlled conductive, input voltage causes current to flow in the primary of the transformer and a magnetic flux is formed in the transformer. The voltage induced in the secondary of transformer is negative, and the diode $D_1$ is reverse biased. Current flows from capacitor $C_1$ to the load.

Once the main switching component is opened, the primary current drops and the voltage in the secondary forward-biases the diode $D_1$ such that current from the transformer may flow. The current charges the capacitor $C_1$ and supplies the load with an output current $i_o$.

In Figure 1, the main switching component $Q_1$ is a MOSFET. The gate of the MOSFET is controlled with a pulse width modulated (PWM) voltage $u_g$. The PWM voltage $u_g$ is provided by a gate driver $A_2$ that is adapted to control the main switching component $Q_1$ on the basis of a control signal $C_s$. The gate driver $A_2$ effectively amplifies the control signal so that the main switching component is controlled according to the control signal $C_s$.

The converter of the invention comprises further a pulse generator adapted to generate a pulse sequence. Each pulse of the pulse sequence forms a start pulse $u_{set}$ which is used for starting a switching period of the PWM voltage.

The converter comprises further a maximum current comparator $A_1$ in the primary circuit. The maximum current comparator is adapted to produce a first reset signal $u_{rp}$ when the primary current is above a set limit. The purpose of the comparator $A_1$ is to protect the converter from excessive current. As shown in Figure 1, the sense resistor is arranged in the primary circuit such that primary current flows through the resistor. The voltage over the resistor is measured and fed to the maximum current comparator $A_1$. The other input of the comparator is the set limit and it is presented as a voltage value $u_{i,max}$. The comparator compares the current with the set limit, and produces the first reset signal $u_{rp}$ if the current is higher than the set limit. It is clear that the voltage over the sense resistor $R_s$ is directly proportional to the current, and therefore the current is compared with a set limit that is a voltage value.

The converter of the invention comprises further a secondary side controller in the secondary circuit. The secondary side controller is adapted to produce a second reset signal $u_{rs}$ for controlling an electrical property in the secondary circuit. The controlled electrical property in the embodiment of Figure 1 is voltage.

Further, the converter of the invention comprises a digital isolator $D_4$. The digital isolator receives the second reset signal $u_{rs}$ from the secondary side controller. The second reset signal is transmitted through the isolation barrier of the digital isolator to the primary circuit. The second reset signal is used in connection with the voltage control as will be described later.

The converter according to the disclosure comprises a gate driver logic circuit. The circuit is in the primary side of the converter and is adapted to receive the start pulse $u_{set}$, the first reset signal $u_{rp}$ and the second reset signal $u_{rs}$ that is transmitted to the primary side of the converter. Based on these signals the gate driver logic circuit outputs the control signal $C_s$ that is amplified by the gate driver $A_2$.

According to an embodiment shown in Figure 1, the digital isolator $D_4$ is further adapted to receive the pulse sequence from the primary circuit and to transmit the pulses $u_{set}$ of the pulse sequence to the secondary circuit. Further, the secondary side controller comprises a voltage ramp generator which is adapted to generate a voltage ramp $u_{ramp}$ during each switching period in synchronism with pulses of the pulse sequence. According to the embodiment, the flyback converter is voltage controlled, and the converter receives feedback from the output voltage of the converter.

According to a preferred embodiment, the gate driver logic circuit comprises an SR-latch $D_3$ having S- and R-inputs and an output Q. The pulse generator generating start pulses $u_{set}$ are connected to S-input. First and second reset signals $u_{rp}$, $u_{rs}$ are connected to inputs of a logical OR-circuit $D_2$ and the output of the logical OR-circuit is connected to R-input of the SR-latch $D_3$. This way each start pulse sets the output Q of the SR-latch high. The output Q of the SR-latch is also the output of the gate driver logic circuit, and therefore each start pulse turns the main switching component to conducting state and also starts a switching period of PWM voltage.

Either of the reset pulses is able to reset the SR-latch meaning that output of the OR-circuit connected to R-input sets the output of the SR-latch low and thereby ends the gating pulse of the main switching component turning it off. Thus when the primary current is above set limit, the output of driver circuit shuts the main switching component $Q_1$ by resetting the SR-latch. Further, a second reset signal is obtained from the secondary side of the converter circuit when the secondary side controls the voltage. This way the secondary side defines the duty ratio of the main switching component regulating the output voltage.

The pulse sequence has a very small duty ratio. The pulse width of $u_{set}$, $t_{set}$, is preferably configured as minimum pulse width of PWM-signal $u_g$. Period of $u_{set}$, $T_s$ defines the converter switching frequency.

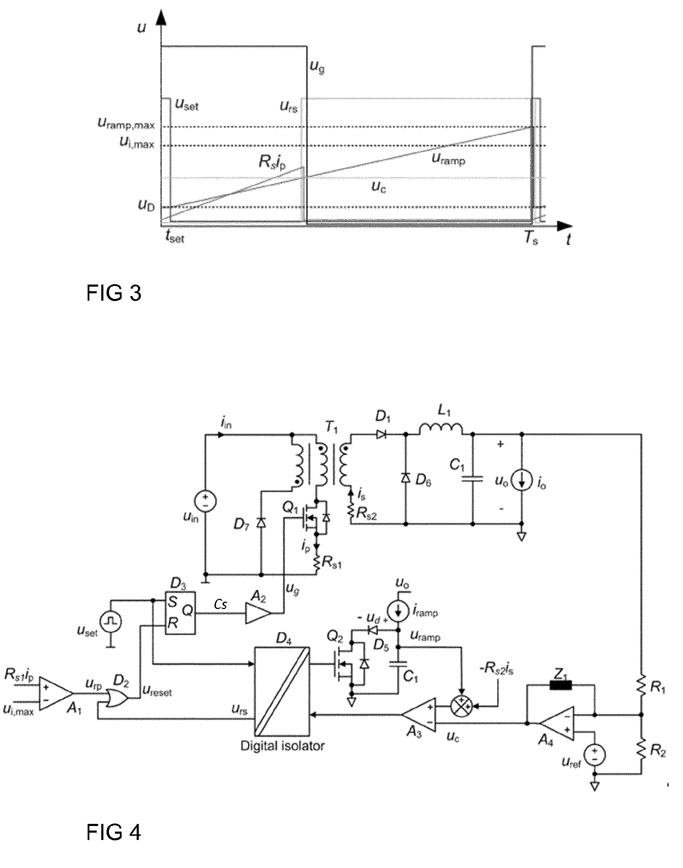

Next the operation of the flyback converter of the embodiment of Figure 1 will be described in more detail together with Figures 2 and 3. Assuming that the primary side control circuits have proper supply voltages, output voltage $u_o$ is low and secondary side circuit is therefore inoperative and does not produce reset signal, the start up operation of converter of Figure 1 is as follows. Voltage pulse $u_{set}$ sets the PWM voltage or gate voltage $u_g$ of the main switching component high and primary current $i_p$ starts to flow. PWM voltage $u_g$ is set low when the primary current $i_p$ reaches the set current limit. The converter operates against the maximum current limit charging the secondary side. By ramping up the set primary current limit from zero to its nominal value, a soft-start function of the converter can be implemented.

When $u_o$ is high, the secondary side circuits take over the converter control and reset pulse is received from the secondary side before the primary current reaches the current limit, i.e. the secondary side defines the duty-ratio and regulates the output voltage.

The secondary side control system of the embodiment of Figure 1 comprises a voltage ramp generator ($Q_2$, $D_5$, $i_{ramp}$ and $C_2$), PWM ramp comparator $A_3$ and output-voltage-error amplifier $A_4$. Start pulse $u_{set}$ is transmitted to secondary side through digital isolator $D_4$ synchronizing the voltage ramp $u_{ramp}$ with the primary-side circuit. Start pulse discharges capacitor $C_2$ to diode $D_5$ forward voltage $u_D$ starting a PWM period. Constant current generator $i_{ramp}$ charges $C_2$ until a new start pulse arrives. Voltage ramp or PWM ramp $u_{ramp}$ is a sawtooth wave whose lower limit is $u_D$ and higher limit is defined by

$$u_{ramp,\max} = \frac{(T_s - t_{set})i_{ramp}}{C_2} + u_D \tag{1}$$

Output voltage error amplifier sets the control voltage $u_c$ between $u_D$ and $u_{ramp,max}$ defining the converter duty ratio in such a manner that output voltage sets to a desired value. Having the diode $D_5$ allows condition $u_c < u_D$ where second reset is always high.

If, within a PWM period in normal operation mode, maximum current limit is reached before second reset pulse from the secondary arrives, first reset pulse sets PWM pulse $u_g$ low. This means that maximum current limit works also after the secondary-side control starts operating and converter is short-circuit proof.

Figure 2 shows waveforms of the converter of Figure 1 when secondary-side circuit is not charged and converter operates against maximum current limit. It can be seen from Figure 2 that a PWM pulse $u_g$ controlling the main switching component is started when $u_{set}$ arrives. At the same instant the current ip starts to flow. In Figure 2, a voltage $R_s i_p$ that is proportional to primary current is shown. The linearly increasing voltage is compared with set limit $u_{i,max}$. Once the voltage over the sense resistor exceeds the set limit, a reset signal $u_{rp}$ is generated. Reset signal is input to the R-input of the latch, and the output Q of the latch turns low, and gate voltage $u_g$ is removed from the main switching component $Q_1$ ending the ON-period of the produced PWM voltage. Once the period of $T_s$ has elapsed, the signal generator produces another start pulse $u_{set}$, and the procedure is repeated charging the secondary side.

Figure 3 shows waveforms of the converter of Figure 1 while secondary side circuit is controlling the converter. The PWM period is started when start pulse $u_{set}$ arrives at the secondary side through the digital isolator $D_4$. The start pulse controls the gate of the controlled switch $Q_2$ and capacitor $C_2$ is discharged through diode $D_5$ and the switch $Q_2$. The capacitor $C_2$ is discharged to the forward voltage $u_D$ of the diode $D_5$. Once the start pulse $u_{set}$ goes low, the voltage $u_{ramp}$ of the capacitor $C_2$ starts to increase from its initial value $u_D$ as constant current is generated with a constant current generator $i_{ramp}$.

The output voltage of the converter $u_o$ is fed to voltage error amplifier that generates control voltage $u_c$. The voltage error amplifier consists of a resistive voltage divider $R_1$, $R_2$ and an operational amplifier $A_4$ together with an impedance $Z_1$ connected between negative input and the output of the operational amplifier $A_4$. Voltage reference $u_{ref}$ is connected to the positive input of the operational amplifier. The voltage error amplifier produces the control voltage $u_c$, and this voltage is compared with the voltage ramp $u_{ramp}$. As seen in Figure 3, once the voltage ramp $u_{ramp}$ exceeds the control voltage $u_c$, output of the comparator $A_3$ goes high producing the second reset signal $u_{rs}$ that is transmitted to the primary side of the circuit. Once the reset signal is received in the primary, the gate signal $u_g$ goes low driven by the gate control logic circuit.

Ramp voltage $u_{ramp}$ increases to value $u_{ramp,max}$ according to equation (1) above. At time instant $T_s$ another start pulse arrives, and the process is continued. Figure 3 shows also the voltage $R_s i_p$ proportional to primary current and the primary current limit $u_{i,max}$ to which the primary current is compared with using comparator $A_1$. In Figure 3, the primary current does not reach the limit before the reset pulse is obtained from the secondary side circuit.

Figure 4 presents a forward converter with peak-current-mode control. The operation of the forward converter is as follows. A controllable switch, such as MOSFET $Q_1$, is connected in series with a primary winding of a transformer $T_1$. Once the input voltage is applied to the primary winding, a voltage is induced to the secondary winding. As the polarities of the windings are as marked in Figure 4, the secondary current flows at the same time as the primary current through the switch $Q_1$. Diode $D_1$ in the secondary is reverse biased when the switch is turned off, and the inductor $L_1$ in the secondary circuit keeps the secondary current flowing through diode $D_6$ while the output voltage $u_o$ is sustained with capacitor $C_1$. A tertiary winding is used in the circuit to let the core flux of the transformer to decline when the switch $Q_1$ is turned off.

Secondary-side peak-current-mode control is suited for converters that have proper peak-current information available at the secondary side. Such converters are forward, full-bridge and half-bridge converters, for example. Peak-current-mode control is commonly used method to provide desired dynamical behaviour as well as current limiting features in switched-mode converters. Usually, this kind of system utilizes inner loop peak-current control and outer loop voltage control.

In the embodiment of Figure 4, the various components of the circuit are marked with same symbols as in Figure 1. The primary side circuit of the control circuitry in Figure 4 operates similarly to that of Figure 1. That is to say that the pulsed voltage source produces start signal $u_{set}$, primary side current is measured using sense resistor $R_{s1}$ in series with the main switching component $Q_1$ and the voltage that is proportional to the primary current is compared with a set limit $u_{i,max}$ for producing first reset signal $u_{rp}$.

Second reset signal is obtained from the secondary-side circuit through the digital isolator $D_4$. Once one of the reset signals is high, the output of the gate control logic circuit goes down and ends the conduction period of the main switching component that was started by the start pulse $u_{set}$.

Major difference between the voltage-mode and the peak-current mode control methods is the way the PWM signal and the reset signal are generated. As discussed in connection with Figure 1, in the voltage-mode control the output voltage control signal $u_c$ is compared to an artificial voltage ramp $u_{ramp}$. In the peak-current mode control the second reset signal originates from comparator $A_3$ and is generated by comparing voltage control signal to the voltage proportional to inductor $L_1$ current. As seen in Figure 4, a sense resistor $R_{s2}$ is provided in the secondary circuit. The voltage $-R_{s2}i_s$ proportional to the inductor $L_1$ current is fed to summation element, the output of which is compared with the voltage control signal $u_c$ in comparator $A_3$. Voltage $R_{s2}i_s$ has a negative sign because the direction of current is as defined in Figure 4.

Figure 4 shows an embodiment in which a voltage ramp $u_{ramp}$ is added to the measured voltage that is proportional to inductor current. However, this voltage ramp is not necessarily needed. The voltage ramp is needed for slope compensation in converters designed to operate near 50% duty cycle or above. The artificial compensation ramp $u_{ramp}$ can be used as a compensation slope by adding it to the measured current slope $(-R_{s2}i_s)$ as shown in Figure 4. The compensation ramp is produced similarly as the voltage ramp $u_{ramp}$ in the embodiment of Figure 1.

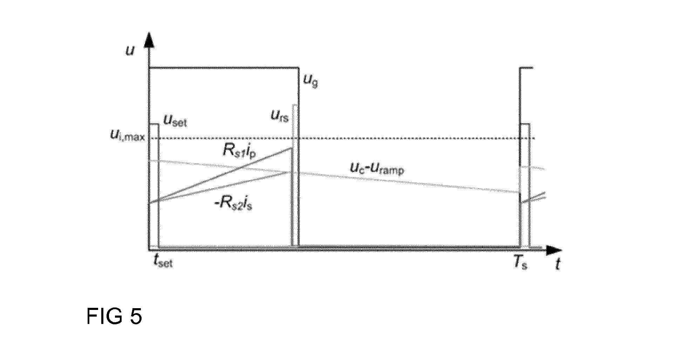

Figure 5 shows operational waveforms of the embodiment of Figure 4 when the secondary-side circuit is controlling the converter under peak-current mode with slope compensation. Again, the pulse period is started with start pulse $u_{set}$. The secondary side current is and thus the voltage $-R_{s2}i_s$ that is proportional to the secondary side current starts to increase and when this voltage exceeds the limit $u_c-u_{ramp}$, a reset signal $u_{rs}$ is given with the comparator $A_3$. The reset signal is transmitted to the primary side circuit and the gate control logic pulls the output signal to the amplifier $A_2$ down thereby shutting-down the main switch $Q_1$. In Figure 5 the ramp voltage $u_{ramp}$ and the control voltage $u_c$ are combined and the voltage proportional to secondary current is compared to this combined voltage. Figure 5 further shows the primary current limit $u_{i,max}$ and the voltage proportional to primary current $R_{s1}i_p$. The operation is again repeated when another start pulse arrives at time instant $T_s$.

The SR-latch used in the embodiments of the invention has a forbidden state where both R = 1 and S = 1. The SR-latch should be configured to have either reset-dominant or set-dominant truth table. In set dominant configuration shown in Table 1 below, the minimum pulse width of PWM voltage $u_g$ is the same as pulse width of the start pulse $u_{set}$. In reset-dominant truth table shown in Table 2, the duty ratio of PWM voltage $u_g$ can be 0%.

Table 1

| S | R | Q | Next Q |
|---|---|---|---|
| 1 | 0 | 0 | 1 |
| 0 | 1 | 1 | 0 |
| 1 | 1 | 1 | 1 |

Table 2

| S | R | Q | Next Q |
|---|---|---|---|
| 1 | 0 | 0 | 1 |
| 0 | 1 | 1 | 0 |
| 1 | 1 | 1 | 0 |

In an embodiment of the invention the duty ratio of the PWM signal is limited such that it has a maximum or minimum limit. Minimum duty-ratio limit is implemented if SR-latch has set-dominant truth table described above. In forward converters the duty ratio should be limited to have values below 50%.

It is clear that the converter of the invention can have all necessary and optional auxiliary circuits which are used also in connection with converters with similar main topology. These auxiliary circuits include under-voltage lock-out, output over-voltage protection and leading edge blanking circuits. Under-voltage lock-out is used for preventing the operation of the converter if the supply voltages to the control circuitry are too low. Output over-voltage protection is operated when the output voltage is too high. This can be accomplished by keeping the second reset signal high when the output voltage is above a set limit, thereby preventing additional charging of the converter output. Leading edge blanking is used for blanking the very beginning of the current pulses such that possible current spikes in the switched current do not affect the comparison of the current with a reference. The blanking may be implemented by forcing the current comparator output signal to be low when gate voltage goes high for a period of 100 ns, for example. During that blanking time current spikes are attenuated.

The above present examples implementing the converter of the invention are not to be kept as limiting the invention to the given examples. The invention can be utilized in various converter topologies and control schemes. The logic functions described in connection with the embodiments can be implemented using discrete logic circuits or using programmable logic.

The examples shown in the drawings and described above include one main switching component $Q_1$. However, the invention can be utilized also in connection with such topologies that include two or more main switching components which are used for switching the primary current on and off. In such topologies the circuit also comprises a logic that applies the gating signals to the main switching components in desired manner and separate gate drivers for each of the main switching components. For example, when a reset signal is generated, the logic circuit is capable of turning the main switching components off.

It will be obvious to a person skilled in the art that, as the technology advances, the inventive concept can be implemented in various ways. The invention and its embodiments are not limited to the examples described above but may vary within the scope of the claims.

**Claims**

1. An isolated switched DC-DC converter comprising a transformer providing isolation between a primary circuit and a secondary circuit,
   a main switching component ($Q_1$) provided in the primary circuit adapted to switch the primary current on and off,
   a gate driver ($A_2$) adapted to control the main switching component ($Q_1$) on the basis of a control signal ,
   a pulse generator adapted to generate a pulse sequence, each pulse of the pulse sequence forming a start pulse ($u_{set}$) for starting a switching period,
   a maximum current comparator ($A_1$) in the primary circuit adapted to produce a first reset signal ($u_{rp}$) when the primary current is above a set limit,
   a secondary side controller in the secondary circuit adapted to produce a second reset signal ($u_{rs}$) for controlling an electrical property in the secondary circuit,
   a digital isolator ($D_4$) adapted to receive the second reset signal from the secondary side controller and to transmit the second reset signal to the primary circuit, and
   a gate driver logic circuit ($D_3$, $D_2$) adapted to receive the start pulse, the first reset signal and the second reset signal, and to form the control signal to the gate driver based on the start pulse, the first reset signal and the second reset signal.

2. An isolated switched DC-DC converter according to claim 1, wherein the secondary side controller is a current controller comprising
   an output voltage error amplifier ($A_4$) adapted to amplify an error between an output voltage reference and output voltage,

a circuit for obtaining a voltage signal proportional to secondary circuit current, and

a comparator for comparing the voltage signal proportional to secondary current with the output of the output voltage error amplifier, the comparator outputting the second reset signal ($u_{rs}$) to turn the main switching component ($Q_1$) off.

3. An isolated switched DC-DC converter according to claim 2, wherein the digital isolator is further adapted to receive the pulse sequence and to transmit the pulses of the pulse sequence to secondary circuit, and

the secondary side controller comprises a voltage ramp generator which is adapted to generate a voltage ramp ($u_{ramp}$) during each switching period, the voltage ramp being added to the voltage signal proportional to secondary circuit current for slope compensation.

4. An isolated switched DC-DC converter according to claim 1, wherein the converter is voltage controlled converter and the digital isolator is further adapted to receive the pulse sequence from the primary circuit and to transmit the pulses of the pulse sequence to secondary circuit, and

the secondary side controller comprises a voltage ramp generator which is adapted to generate a voltage ramp $u_{ramp}$) during each switching period in synchronism with pulses of the pulse sequence.

5. An isolated switched DC-DC converter according to any one of previous claims 1 to 4, wherein the a gate driver logic circuit ($D_3$, $D_2$) comprises a logical OR-circuit adapted to receive the first reset signal and second reset signal, and an SR-latch circuit, the S-input of which is connected to receive the start pulse and the R-input of which is connected to receive the output of the logical OR circuit, wherein the output (Q) of the SR-latch circuit forms the control signal ($C_s$) to the gate driver.

6. An isolated switched DC-DC converter according to claim 5, wherein each start pulse received by the SR-latch is adapted to start a switching period of the main switching component.

7. An isolated switched DC-DC converter according to claim 5 or 6, wherein either of the first reset signal or second reset signal received by the SR-latch through the logical OR-circuit are adapted to end the conduction period of the main switching component ($Q_1$).

8. An isolated switched DC-DC converter according to any one of previous claims 1 to 7, wherein the pulse sequence produced by the pulse generator defines the converter switching frequency.

9. An isolated switched DC-DC converter according to any one of previous claims 1 to 8, wherein the converter comprises two or more main switching components that are adapted to switch the primary current on and off.

FIG 1

FIG 2

FIG 3

FIG 4

FIG 5

Europäisches
Patentamt
European
Patent Office
Office européen
des brevets

# EUROPEAN SEARCH REPORT

Application Number

EP 14 19 8097

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 103 312 200 A (CHENGDU MONOLITHIC POWER SYS) 18 September 2013 (2013-09-18) * the whole document * & US 2015/003119 A1 (LI YIKE [CN]) 1 January 2015 (2015-01-01) ----- | 1-9 | INV. H02M3/335 |
| Y | US 2014/268917 A1 (MA SHAOYU [CN] ET AL) 18 September 2014 (2014-09-18) * the whole document * ----- | 1-9 | |
| Y | US 2004/080962 A1 (CHARYCH ARTHUR [US]) 29 April 2004 (2004-04-29) * paragraphs [0009] - [0010]; figures 1,2 * ----- | 3,4 | |
| Y | EP 1 850 468 A2 (WOLFSON MICROELECTRONICS PLC [GB]) 31 October 2007 (2007-10-31) * paragraph [0036]; figure 6 * ----- | 2,3 | |

**TECHNICAL FIELDS SEARCHED (IPC)**

H02M

The present search report has been drawn up for all claims

| Place of search | Date of completion of the search | Examiner |
|---|---|---|
| Munich | 28 May 2015 | Bader, Arnaud |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

..........................................................................

& : member of the same patent family, corresponding
    document

EPO FORM 1503 03.82 (P04C01)

**EP 3 035 515 A1**

## ANNEX TO THE EUROPEAN SEARCH REPORT
## ON EUROPEAN PATENT APPLICATION NO.

EP 14 19 8097

This annex lists the patent family members relating to the patent documents cited in the above-mentioned European search report.
The members are as contained in the European Patent Office EDP file on
The European Patent Office is in no way liable for these particulars which are merely given for the purpose of information.

28-05-2015

| Patent document cited in search report | | Publication date | Patent family member(s) | | Publication date |
|---|---|---|---|---|---|
| CN 103312200 | A | 18-09-2013 | CN 103312200 A<br>US 2015003119 A1 | | 18-09-2013<br>01-01-2015 |
| US 2014268917 | A1 | 18-09-2014 | DE 102014103090 A1<br>US 2014268917 A1 | | 23-10-2014<br>18-09-2014 |
| US 2004080962 | A1 | 29-04-2004 | NONE | | |
| EP 1850468 | A2 | 31-10-2007 | CN 101064472 A<br>EP 1850468 A2<br>GB 2437556 A<br>US 2007252567 A1 | | 31-10-2007<br>31-10-2007<br>31-10-2007<br>01-11-2007 |

EPO FORM P0459

For more details about this annex : see Official Journal of the European Patent Office, No. 12/82